# EUROPÄISCHE PATENTSCHRIFT

(11) **EP 0 833 756 B1**
(45) Veröffentlichungstag und Bekanntmachung des Hinweises auf die Patenterteilung: **22.09.1999**
(21) Anmeldenummer: 96916167.8
(22) Anmeldetag: 29.05.1996
(51) Int. Cl.: B60C 23/04

(54) **VERFAHREN ZUM BETREIBEN EINER EINRICHTUNG ZUM ÜBERWACHEN UND DRAHTLOSEN SIGNALISIEREN EINER DRUCKÄNDERUNG IN LUFTREIFEN AN FAHRZEUGEN**
METHOD OF OPERATING A DEVICE FOR MONITORING VEHICLE-TYRE PRESSURES AND INDICATING CHANGES IN PRESSURE BY RADIO
PROCEDE DE FONCTIONNEMENT D'UN DISPOSITIF DE SURVEILLANCE ET DE SIGNALISATION SANS FIL D'UNE VARIATION DE PRESSION DANS LES PNEUMATIQUES DES VEHICULES

(30) Priorität: 21.06.1995 DE 19522486
(43) Veröffentlichungstag der Anmeldung: 08.04.1998
(73) Patentinhaber: AMI DODUCO GmbH, 75181 Pforzheim (DE)
(72) Erfinder: UHL, Günter, D-74921 Helmstadt-Bargen (DE); NORMANN, Norbert, D-75223 Niefern-Öschelbronn (DE); SCHULZE, Gunter, Lothar, D-75228 Ispringen (DE); KESSLER, Ralf, D-76327 Pfinztal (DE)
(74) Vertreter: Twelmeier, Ulrich, Dipl. Phys.
(86) Internationale Anmeldenummer: EP9602304
(87) Internationale Veröffentlichungsnummer: WO9700784

(56) Entgegenhaltungen:
- WO-A-92/14620
- DE-A- 4 303 583

## Beschreibung

Die Erfindung geht aus von einem Verfahren mit den im Oberbegriff des Anspruchs 1 angegebenen Merkmalen. Ein solches Verfahren ist aus der WO-A-92/14620 bekannt.

Die DE 43 03 583 A1 offenbart eine Einrichtung mit einer im Ventil des Luftreifens angeordneten Einrichtung zur Erzeugung eines drahtlos übermittelbaren Druckabnahme-Anzeigesignals mit einer Batterie als Stromquelle, mit einem vorzugsweise halbleitenden, piezo-resistiven Drucksensor, mit einem Analog-Digital-Wandler zum Digitalisieren des vom Drucksensor gewonnenen Drucksignals, mit einem Speicher zum Speichern des Drucksignals, mit einem Vergleicher, welcher das Drucksignal mit einem vorher gespeicherten Vergleichsdrucksignal vergleicht, mit einem Sender und mit einem Zeitschalter, welcher die Einrichtung von Zeit zu Zeit aktiviert und im übrigen zum Zwecke der Stromeinsparung abgeschaltet hält. Der Analog-Digital-Wandler, der Speicher, der Vergleicher und der Zeitschalter sind vorzugsweise in Baueinheit mit einem Mikroprozessor verwirklicht, welcher das vom Drucksensor gelieferte Drucksignal mit dem vorher gespeicherten Vergleichsdrucksignal vergleicht, ein Signal erzeugt, wenn die Abweichung des Drucksignals vom Vergleichsdrucksignal einen Schwellenwert übersteigt und dann den Sender aktiviert, welcher daraufhin eine Information über die festgestellte Abweichung an ein im Fahrzeug, insbesondere im Bereich des Armaturenbretts, angeordnetes Empfangsgerät übermittelt, welches die Information verarbeitet und dem Fahrer anzeigt, in welchem Luftreifen der Luftdruck signifikant vom Vergleichsdruck abweicht. Als Vergleichsdruck wird der Solldruck des Luftreifens dauerhaft jedesmal dann eingespeichert, wenn an einer Tankstelle der Luftdruck mit Hilfe eines externen Manometers überprüft und mittels einer Druckluftquelle auf seinen Sollwert eingestellt wird.

Die praktische Verwendbarkeit einer solchen Einrichtung zur Reifendrucküberwachung hängt davon ab, daß die Einrichtung so wenig Strom verbraucht, daß sie ohne Batteriewechsel über mehrere Jahre betriebsbereit ist. Den größten Stromverbrauch hat der Sender. Bei der bekannten Einrichtung wird er nur dann aktiviert, wenn die Abweichung des gemessenen Reifendrucks vom Sollwert einen vorgegebenen Schwellenwert überschreitet. Darüber hinaus wird der Druck nicht ständig, sondern nur in regelmäßigen Abständen, beispielsweise alle vier Sekunden, gemessen und mit dem Sollwert verglichen. Der Sollwert ist ein Absolutwert. Er wird jedesmal dann gespeichert, wenn der Reifen nachgefüllt wird. Zu diesem Zweck wird die Bewegung des Ventilstößels automatisch überwacht, z.B. mittels eines am Ventilstößel angebrachten Magneten, der bei Bewegung des Ventilstößels einen Magnetschalter betätigt. Erkennt die Einrichtung eine Bewegung des Ventilstoßels, wird der danach gemessene Reifendruck als Vergleichsdruck gespeichert.

Trotz der stromsparenden Arbeitsweise hat die bekannte Einrichtung manche Nachteile:

Der Reifendruck ändert sich nicht nur infolge von Leckage, sondern auch durch unterschiedliche Beladung des Fahrzeugs und mit der von den Fahrbedingungen abhängigen Reifentemperatur. Wird der Reifen bei niedriger Temperatur befüllt, dann steigt der Druck mit steigender Außentemperatur, aber auch infolge des Walkens des Reifens im Fahrbetrieb an. Wird hingegen der Reifen nach schneller Fahrt oder an heißen Tagen befüllt, dann sinkt der Druck mit sinkender Außentemperatur bzw. bei Stillstand oder langsamer Fahrt ab. Das bedeutet, daß bei niedrigem Schwellenwert allein wegen Änderungen der Reifentemperatur der Sender häufiger eingeschaltet wird, als nötig wäre, mit der Folge eines unnötigen, die Batterielebensdauer herabsetzenden Stromverbrauchs. Dem könnte man dadurch begegnen, daß man den Schwellenwert erhöht; das geht jedoch zu Lasten der Zuverlässigkeit der Reifendrucküberwachung. Eine andere, in der DE 43 03 583 A1 offenbarte Möglichkeit besteht darin, im Ventil des Luftreifens zusätzlich einen Temperatursensor anzuordnen und mit dessen Hilfe unter Berücksichtigung der bekannten Temperaturabhängigkeit des Luftdrucks die von Änderungen der Temperatur verursachte Änderung des Reifendrucks rechnerisch zu kompensieren. Das kompliziert jedoch die Einrichtung, welche durch den Zwang, sie in das Ventil zu integrieren, ohnehin recht komplex ist und erhöht deren Störanfälligkeit.

Nachteilig ist ferner, daß die Bewegung des Ventilstößels durch einen gesonderten Sensor überwacht werden muß. Auch dadurch wird der Aufbau des Ventils aufwendiger.

Die bekannte Einrichtung ist empfindlich gegen Bedienungsfehler: Wenn der Fahrer den Reifen mit einem falschen Luftdruck befüllt, wird der falsche Luftdruck automatisch als Sollwert gespeichert und in der Folge der Luftdruck mit dem falschen Sollwert verglichen.

Die gesamte Drucksignalauswertung findet bei der bekannten Einrichtung im Ventil statt. Jedes Signal, welches von der Einrichtung im Ventil an das Empfangsgerät gesendet wird, ist ein Warnsignal. Übergeordnete Randbedingungen für die Auswertung, z.B. der Beladungszustand, können nicht vorgegeben werden.

Die WO-A-92/14620 zeigt bereits ein Verfahren mit den Merkmalen des Oberbegriffs des Anspruchs 1, in welchem eine Druckänderung in Fahrzeugreifen überwacht wird, indem das neue Vergleichsdrucksignal das bisherige gespeicherte Vergleichsdrucksignal ersetzt. Beruht das Vergleichsdrucksignal auf einer zufällig falschen Druckmessung, wird beim nächsten Meßvorgang mit hoher Wahrscheinlichkeit ein falscher Alarm ausgelöst, der zwar durch nachfolgende Meßwerte wieder berichtigt werden kann, zunächst einmal jedoch verstärkt Energie aus der Batterie verzehrt und den Fahrer unnötig verunsichert.

Der vorliegenden Erfindung liegt die Aufgabe zugrunde, die Überwachung des Luftdrucks in Luftreifen mit Hilfe einer im Ventil angeordneten und drahtlos signalisierenden Übewachungseinrichtung ohne Einbuße an Batterielebensdauer sicherer gegen Fehlmessungen zu gestalten.

Diese Aufgabe wird gelöst durch ein Verfahren mit den im Anspruch 1 angegebenen Merkmalen: Vorteilhafte Weiterbildungen der Erfindung sind Gegenstand der abhängigen Ansprüche.

Erfindungsgemäß wird in der im Ventil vorgesehenen Überwachungseinrichtung als Vergleichsdrucksignal nicht ein absoluter Sollwert des Luftdrucks gespeichert; demgemäß wird in der im Ventil vorgesehenen Überwachungseinrichtung auch nicht die Abweichung des aktuellen Reifendrucks vom Sollwert festgestellt und signalisiert; es wird vielmehr lediglich eine eventuelle Drift des Reifendrucks erfaßt und eventuell signalisiert und zu diesem Zweck das Vergleichsdrucksignal laufend angepaßt und lediglich die weitere Drift des Luftdrucks im Reifen erfaßt und eventuell signalisiert. Im einfachsten Fall wird der aktuell gemessene Druck als Vergleichsdruck gespeichert und bei der nächsten Druckmessung der dann aktuelle Druck mit dem zuvor gespeicherten Vergleichsdruck verglichen. Um zufällige Meßfehler auszugleichen und unnötige Aktivierungen des Senders zu vermeiden, kann es jedoch vorteilhaft sein, das Vergleichsdrucksignal nicht lediglich aus dem letzten zuvor vom Drucksensor gelieferten Drucksignal zu bilden, sondern aus mehreren vorher vom Sensor gelieferten Drucksignalen, z.B. durch Mittelwertbildung aus jeweils den letzten drei gemessenen und gespeicherten Drucksignalen.

Um eine solche Arbeitsweise zu ermöglichen, enthält die Überwachungseinrichtung vorzugsweise einen Mikroprozessor oder einen ASIC; stattdessen könnte die Einrichtung aber auch eine sonstige elektronische Steuerschaltung enthalten, welche die erfindungsgemäße Arbeitsweise ermöglicht.

Die erfindungsgemäße Arbeitsweise hat Vorteile:
- Änderungen des Reifendrucks, die so langsam erfolgen, daß sie ungefährlich sind, führen nicht in jedem Fall zu einem Aktivieren des Senders. Das gilt insbesondere für Druckänderungen, die durch Temperaturänderungen verursacht sind. Diese Änderungen laufen so langsam ab, daß trotz eines niedrigen Schwellenwertes für die Druckabweichung (gegenwärtig ist mit vertretbarem Aufwand eine Druckschwelle zwischen 10 und 100 mbar möglich) und einer periodischen Druckmessung in Zeitabständen, die optimal zwischen 1 Sekunde und 10 Sekunden liegen, auch ohne daß eine Temperaturkompensation der Druckmessung erforderlich wäre, temperaturbedingte Druckänderungen nicht zu einem Einschalten des Senders führen. Das vereinfacht den Aufbau der Überwachungseinrichtung im Ventil und schont die Batterie.
- Eine Drift infolge unvermeidlicher Diffusion von Luft aus dem Reifen heraus, welcher bei weitem die häufigste Ursache dafür ist, daß Luft in einen Reifen nachgefüllt werden muß, verläuft ebenfalls so langsam, daß sie nicht zu einem Aktivieren des Senders führt. Beim Stand der Technik ist das anders: Wenn dort durch allmähliche, stetige Diffusion der Reifendruck so weit abgesunken ist, daß der Druckverlust den Schwellenwert überschreitet, dann wird bei **jeder** folgenden, z.B. alle vier Sekunden stattfindenden Messung der Sender eingeschaltet, weil der Schwellenwert überschritten ist, und dies so oft, bis der Fahrer eine Tankstelle angefahren und den Reifendruck korrigiert hat. Bis dahin wird jedoch viel Strom aus der Batterie für das Senden verbraucht. Erfindungsgemäß führt jedoch eine langsame, durch Diffusion verursachte Drift des Reifendrucks nicht zu einem Einschalten des Senders. Eine gefährliche Situation wird dadurch dennoch nicht hervorgerufen, weil so langsame Druckverluste durch in größeren Abständen erfolgende Kontrollen, z.B. bei jedem Tankstop, ermittelt und korrigiert werden können. In vorteilhafter Weiterbildung der Erfindung überläßt man die Kontrolle jedoch nicht dem Fahrer bei Gelegenheit eines Tankstops, sondern führt unabhängig davon, ob der Schwellenwert überschritten wurde oder nicht, in Zeitabständen, die groß sind gegenüber den Zeitabständen, in denen der Luftdruck regelmäßig überprüft wird, eine Meldung des aktuellen Reifendrucks an das im Fahrzeug an zentraler Stelle vorgesehene Empfangsgerät durch, in welchem die signalisierten Druckwerte verarbeitet und bewertet werden. Eine langsame Drift des Reifendrucks wird auf diese Weise in angemessenen, die Batterie im Ventil schonenden Zeitabständen erfaßt und dem Fahrer angezeigt, z.B. mit einem Hinweis, der ihm sinngemäß sagt: "Bitte beim nächsten Tankstop den Reifendruck vorne rechts erhöhen." Geeignete Zeitabstände, in welchen unabhängig von dem Überschreiten eines vorgegebenen Schwellenwertes auf jeden Fall eine Information über den Reifendruck gesendet wird, betragen zwischen einer Minute und einer Stunde, wobei die größeren Zeitabstände besonders bevorzugt sind.
- Der Aufbau des Ventils ist dadurch vereinfacht, daß kein Sensor benötigt wird, um die Bewegung des Ventilstößels zu überwachen.
- Dadurch, daß in der Überwachungseinrichtung im Ventil kein Vergleich mit einem absoluten Sollwert des Luftdrucks durchgeführt wird, muß an jener Stelle auch keine komplette Auswertung stattfinden, sondern lediglich eine Driftkontrolle. Alles weitere kann einem zentralen Auswerterechner überlassen werden. Das hat den weiteren Vorteil, daß die Reifendruckkontrolle zuverlässiger ist und von Bedienungsfehlern beim Reifendruckfüllen oder von Eichfehlem des Manometers am Füllgerät unabhängig ist. Findet der Vergleich mit einem absolut vorgegebenen Solldruck erst in einem zentralen Rechner statt, dann kann dieser auch Fehler beim Befüllen anzeigen und eine sofortige Korrektur veranlassen; ferner können zentrale Vorgaben berücksichtigt werden, z.B. der Ladezustand (Gewicht der Zuladung, insbesondere bei Lastkraftwagen; Anzahl der beförderten Personen bei Bussen und Personenkraftwagen).
   Für die Fahrsicherheit besonders gefährlich sind rasche Druckverluste infolge einer Beschädigung des Reifens oder seines Ventils. Solche Druckverluste können bei dem erfindungsgemäßen Verfahren besonders zuverlässig ermittelt werden, weil die Meßintervalle (die "ersten" Zeitabstände) kurz und der Schwellenwert niedrig sein können, ohne die beim Stand der Technik mögliche Batterielebensdauer zu verkürzen. In vorteilhafter Weiterbildung der Erfindung ist vorgesehen, daß die "ersten" Zeitabstände verkürzt werden, sobald ein den Schwellenwert übersteigender Druckverlust festgestellt wird. Ein einziger, den Schwellenwert übersteigender Druckverlust-Meßwert könnte auf einem zufälligen Meßfehler beruhen. Um zufällige Warnsignale auszuschalten, ist es vorteilhaft, nach einem den Schwellenwert überschreitenden Druckabfall-Meßwert die Situation dadurch zu klären, daß man weitere Messungen mit erhöhter Meßrate folgen läßt. Bestätigen die folgenden Messungen den Druckabfall, kann sehr rasch ein Warnsignal gesendet werden. Bestätigen die folgenden Messungen den Druckabfall jedoch nicht, ist klar, daß eine Fehlmessung vorlag, und der Sender wird erst gar nicht aktiviert. Auf diese Weise wird ohne Einbuße an Sicherheit die Batterie geschont und der Fahrer nicht durch Fehlmessungen irritiert.
   Ebenso, wie ein den Schwellenwert übersteigender Druckverlust festgestellt werden kann, kann auch ein den Schwellenwert übersteigender Druckanstieg festgestellt werden. Dabei handelt es sich regelmäßig um den Befüllvorgang. In diesem Fall kann das Senden eines den Reifendruck wiedergebenden Signales zurückgestellt werden, bis sich der Reifendruck stabilisiert hat, der Befüllvorgang also beendet ist.
   Sinken der Druckverlust und der Druckanstieg erneut unter den Schwellenwert ab, werden die Zeitabstände, in denen der Reifendruck durch die im Ventil angeordnete Überwachungseinrichtung überprüft wird, wieder verlängert.

Es lassen sich folgende Betriebszustände unterscheiden:

### 1. Grundzustand

Der Reifendruck hat seinen Sollwert p₀ und ist konstant. Der Zustand liegt vor bei Fahrtbeginn und bei langsamer Fahrt. In regelmäßigen Zeitabständen t₀ wird der Reifendruck gemessen und mit dem zuletzt gemessenen Wert verglichen. Solange keine Veränderung zwischen den beiden Werten festgestellt wird, ist eine Datenübertragung vom Ventil mittels des Senders zum Empfangsgerät nicht erforderlich. Auch geringe Unterschiede zwischen den beiden Druckwerten, z.B. durch die Meßwerterfassung oder durch eine Temperaturänderung hervorgerufen, führen nicht zu einer Datenübertragung zum Empfangsgerät, solange die Unterschiede einen Schwellenwert Δp₀ nicht überschreiten. Der zuletzt gemessene Druckwert wird anstelle des vorher gemessenen Wertes abgespeichert, um dann mit dem nächsten Meßwert verglichen zu werden. Zum Vergleich mit dem aktuellen Druckmeßwert kann anstelle des zuletzt gemessenen Druckwertes auch der Mittelwert aus mehreren zuvor gemessenen Druckwerten benutzt werden.

In regelmäßigen "zweiten" Zeitabständen T₀ wird unabhängig davon, ob der Schwellenwert überschritten wurde, ein komplettes Datentelegramm, welches den aktuellen Druckmeßwert enthält, mittels des Senders an das Empfangsgerät übertragen. Dieses regelmäßige, in größeren Zeitabständen erfolgende Senden dient der Systemüberwachung und ermöglicht es, festzustellen, welches Ausmaß eine allmähliche Drift des Reifendrucks annimmt.

Typische Zahlenwerte sind für
- t₀:: 1 bis 10 Sekunden
- T₀:: 1 bis 60 Minuten
- Δp₀:: 10 bis 100 mbar

### 2. Fahrt ohne Druckverlust

Bei Fahrtbeginn hat der Reifendruck den Ausgangswert p₀. Durch das beim Fahren auftretende normale Walken erwärmt sich der Reifen und damit die Luft im Reifen je nach Geschwindigkeit mehr oder weniger. Dies führt zu einem Anstieg des Drucks im Reifen, so daß der aktuelle Reifendruck über dem Ausgangsdruck p₀ liegt und abhängig von der Fahrgeschwindigkeit und der Fahrbahnbeschaffenheit schwankt. Die damit einhergehenden Änderungen des Reifendrucks laufen so langsam ab, daß in den "ersten" Zeitabständen t₀ die Druckänderung den Schwellenwert Δp₀ nicht erreicht und der Sender deshalb nicht aktiviert wird. Eine Information über den Druck im Reifen wird aber dennoch in den Zeitabständen T₀ mit dem Datentelegramm, welches auch der Systemkontrolle dient, an das Empfangsgerät gesendet. Aus der im Datentelegramm enthaltenen Information über den absoluten Reifendruck erkennt und bewertet ein im Empfangsgerät vorgesehener Rechner langsame Druckänderungen in allen Reifen des Fahrzeugs, insbesondere in den Reifen auf einer gemeinsamen Achse, und erkennt damit die durch normale Walkarbeit hervorgerufenen Druckänderungen.

### 3. Fahrt mit schleichendem Druckverlust

Ein schleichender Druckverlust wird auf dieselbe Art und Weise ermittelt wie langsame Druckänderungen bei Fahrt ohne Druckverlust. Das Erkennen eines schleichenden Druckverlustes erfolgt durch den Rechner im Empfangsgerät anhand der absoluten Druckmeßwerte und aus dem Vergleich mit den Druckmeßwerten der Reifen untereinander.

### 4. Schneller Druckverlust

Wenn es während der Fahrt oder auch im Stillstand durch eine Beschädigung des Reifens oder des Ventils zu einem raschen Druckverlust kommt, dann ist die Drift des Drucks so groß, daß die Druckänderung vom zuletzt gebildeten Vergleichsdrucksignal zum aktuellen Drucksignal den vorgegebenen Schwellenwert überschreitet. In diesem Fall könnte sofort ein entsprechendes, den Druckabfall anzeigendes Signal an das Empfangsgerät gesendet werden. Um zufällige Fehlmessungen auszuschalten, wird jedoch vorzugsweise nicht sofort nach dem Überschreiten des Schwellenwertes ein Signal an das Empfangsgerät gesendet, vielmehr wird zunächst die Meßrate erhöht, d. h., es werden die "ersten" Zeitabstände verkürzt, insbesondere auf Werte zwischen 1 und 100 Millisekunden. Wird das Überschreiten des Schwellenwertes bei den folgenden Messungen bestätigt, vorzugsweise bei den folgenden zwei bis zehn Messungen, dann wird der Sender aktiviert und das Drucksignal an das Empfangsgerät gesendet. Bei den mit höherer Rate erfolgenden Messungen muß natürlich berücksichtigt werden, daß in den kürzeren Zeitabständen bei gleicher Druckabfallgeschwindigkeit der Schwellenwert entsprechend ermäßigt werden muß. Wegen der begrenzten Empfindlichkeit des Drucksensors wird das in dem erforderlichen Ausmaß im allgemeinen nicht möglich sein. Es ist deshalb günstiger, in diesem Fall als Vergleichsdrucksignal das letzte vor der Verkürzung des "ersten" Zeitabstandes gebildete Vergleichsdrucksignal weiterhin zu verwenden, bis die Zeitspanne t₀ verstrichen oder der "erste" Zeitabstand wieder auf seinen Ursprungswert t₀ verlängert wurde.

Eine andere Möglichkeit besteht darin, bei erhöhter Meßrate immer dann ein Drucksignal zu senden, wenn sich der Druckmeßwert um einen bestimmten Betrag, beispielsweise um 10 bis 100 mbar geändert hat. Wird keine Änderung des Drucks mehr festgestellt (Druckänderung kleiner als der Schwellenwert Δp₀), dann wird entweder noch für eine gewisse Zeit mit erhöhter Meßrate weitergemessen oder noch eine vorgegebene Anzahl von Meßwerten mit der erhöhten Meßrate aufgenommen und dann auf die ursprüngliche Meßrate t₀ zurückgeschaltet.

Auf die niedrige Meßrate kann ebenfalls zurückgeschaltet werden, wenn der Druckmeßwert einen vorgegebenen Maximalwert von beispielsweise 5 bar überschreitet oder einen vorgegebenen Minimalwert von beispielsweise 1 bar unterschreitet. Auf die erhöhte Meßrate wird dann wieder umgeschaltet, wenn die Druckmeßwerte signifikant sinken oder steigen.

### 5. Befüllvorgang

Beim Befüllen erfolgt die Druckänderung so rasch, daß bei normaler Meßrate ("erste" Zeitabstände zwischen 1 und 10 Sekunden) der Schwellenwert (zwischen 10 und 100 mbar) regelmäßig überschritten wird. Es kann deshalb so verfahren werden wie bei schnellem Druckverlust. Da der Befüllvorgang im allgemeinen unkritisch ist, besteht auch die Möglichkeit, daß ein Druckmeßsignal erst ausgesendet wird, wenn sich der Reifendruck wieder stabilisiert hat, was die Beendigung des Füllvorganges anzeigt.

### 6. Diebstahlüberwachung

Ein weiterer Vorteil der Erfindung liegt darin, daß sie zur Überwachung der Räder des Fahrzeugs gegen Diebstahl herangezogen werden kann. Die Überwachungseinrichtungen in den Ventilen senden auch während des Stillstands des Fahrzeugs wenigstens in den "zweiten" Zeitabständen ein Datentelegramm mit einer Zustandsinformation an das zentrale Empfangsgerät im Fahrzeug. Wird ein Rad gestohlen, bleibt das Datentelegramm aus, was die Auswerteschaltung im zentralen Empfangsgerät feststellt und mir einem Alarm beantworten kann.

## Patentansprüche

1. Verfahren zum Betreiben einer Einrichtung zum Überwachen und drahtlosen Signalisieren einer Druckänderung in Luftreifen an Fahrzeugen, welche am Ventil des Luftreifens angeordnet ist und
eine Stromquelle,
einen Drucksensor,
einen Analog-Digital-Wandler zum Digitalisieren des vom Drucksensor gewonnenen Drucksignals,
einen Speicher zum Speichern des Drucksignals,
einen Sender,
einen Vergleicher, insbesondere in Baueinheit mit einem Mikroprozessor, welcher das Drucksignal mit einem vorher gespeicherten Vergleichsdrucksignal vergleicht, ein Signal erzeugt, wenn die Abweichung des Drucksignals vom Vergleichsdrucksignal einen Schwellenwert übersteigt, und den Sender aktiviert, welcher daraufhin eine Information über die festgestellte Abweichung an ein im Fahrzeug angeordnetes Empfangsgerät übermittelt,
und einen Zeitschalter enthält, welcher die Einrichtung in Zeitabständen für einen Meß- und Vergleichsvorgang aktiviert und im übrigen zum Zwecke der Stromeinsparung abgeschaltet hält, wobei der Vergleicher das Drucksignal speichert und mit diesem Drucksignal ein neues Vergleichsdrucksignal bildet, welches das bisherige Vergleichsdrucksignal ersetzt, **dadurch gekennzeichnet**, daß das Vergleichsdrucksignal aus mehreren vorher vom Sensor gelieferten Drucksignalen durch Mittelwertbildung gebildet wird.

2. Verfahren nach Anspruch 1, **dadurch gekennzeichnet**, daß der Zeitschalter die Einrichtung in Zeitabständen zwischen 1s und 10s aktiviert.

3. Verfahren nach Anspruch 1 oder 2, **dadurch gekennzeichnet**, daß der Zeitschalter den Sender in "zweiten" Zeitabständen, welche groß gegen gegen die "ersten" Zeitabstände sind, aktiviert und veranlaßt, ein Zustandssignal auch dann auszusenden, wenn keine den Schwellenwert überschreitende Abweichung festgestellt wurde.

4. Verfahren nach Anspruch 3, **dadurch gekennzeichnet,** daß die "zweiten" Zeitabstände zwischen 1min und 1h betragen.

5. Verfahren nach einem der vorstehenden Ansprüche, **dadurch gekennzeichnet**, daß der Schwellenwert und die "ersten" Zeitabstände, in denen die Einrichtung aktiviert wird, so aufeinander abgestimmt sind, daß der Quotient aus dem Schwellenwert und dem "ersten" Zeitabstand groß ist gegen Reifendruckänderungsgeschwindigkeiten, welche bei dichtem Reifen und dichtem Ventil aufgrund von Änderungen der Reifentemperatur infolge des Fahrbetriebes typisch auftreten.

6. Verfahren nach einem der vorstehenden Ansprüche, **dadurch gekennzeichnet**, daß ein schleichender Druckverlust, der unterhalb des Schwellenwertes liegt, durch Auswertung der in den "zweiten" Zeitabständen gesendeten Reifendruckinformationen ermittelt wird.

7. Verfahren nach einem der vorstehenden Ansprüche, **dadurch gekennzeichnet**, daß dann, wenn ein den Schwellenwert übersteigender Druckverlust festgestellt wird, die "ersten" Zeitabstände, in denen in derEinrichtung Druckmeß- und Vergleichsvorgänge ablaufen, verkürzt werden und der Sender dann aktiviert wird, wenn bei einer Anzahl von Druckmeß- und Vergleichsvorgängen, die mit den verkürzten Zeitabständen folgen, das Überschreiten des Schwellenwertes bestätigt wird.

8. Verfahren nach einem der vorstehenden Ansprüche, **dadurch gekennzeichnet**, daß dann, wenn ein den Schwellenwert übersteigender Druckanstieg festgestellt wird, die "ersten" Zeitabstände, in denen in der Einrichtung Druckmeß- und Vergleichsvorgänge ablaufen, verkürzt werden und der Sender dann aktiviert wird, wenn bei einer Anzahl von Druckmeß- und Vergleichsvorgängen, die mit den verkürzten Zeitabständen folgen, das Überschreiten des Schwellenwertes bestätigt wird.

9. Verfahren nach Anspruch 8, **dadurch gekennzeichnet**, daß der Sender erst aktiviert wird, nachdem sich der Reifendruck auf einem höheren Niveau stabilisiert hat.

10. Verfahren nach Anspruch 7 oder 8, **dadurch gekennzeichnet**, daß während des Betreibens mit verkürzten "ersten" Zeitabständen ein neues Vergleichsdrucksignal erst nach Ablauf eines unverkürzten "ersten" Zeitabstandes gebildet wird.

11. Verfahren nach Anspruch 7, 8 oder 9, **dadurch gekennzeichnet**, daß dann, wenn der Druckverlust bzw. der Druckanstieg erneut unter den Schwellenwert absinken, die "ersten" Zeitabstände wieder verlängert werden.

12. Verfahren nach einem der vorstehenden Ansprüche, **dadurch gekennzeichnet**, daß die absoluten Reifendruckwerte im Empfangsgerät verarbeitet und bewertet werden, wohingegen in der im Ventil angeordneten Einrichtung die gemessenen Reitendruckwerte lediglich hinsichtlich einer Drift des Reifendrucks bewertet werden.

## Claims

1. A method of operating a device for monitoring vehicle-tyre pressures and indicating changes in pressure by radio, which is arranged in the valve of the pneumatic tyre and contains
a power source;
a pressure sensor;
an analog/digital converter for digitising the pressure signal obtained from the pressure sensor;
a memory for storing the pressure signal;
a transmitter;
a comparator, in particular in a module with a microprocessor, which compares the pressure signal with a previously stored comparison pressure signal, generates a signal if the deviation of the pressure signal from the comparison pressure signal exceeds a threshold, and activates the transmitter, which thereupon transmits a datum regarding the detected deviation to a receiver arranged in the vehicle; and
a timing switch which activates the device at time intervals for a measurement and comparison operation and otherwise keeps it deactivated for purpose of power conservation, the comparator storing the pressure signal and constituting, with said pressure signal, a new comparison pressure signal which replaces the previous comparison pressure signal, **wherein** the comparison pressure signal is constituted by averaging a number of pressure signals previously supplied by the sensor.

2. The method as defined in Claim 1, **wherein** the timing switch activates the device at time intervals of between 1 second and 10 seconds.

3. The method as defined in Claim 1 or 2, **wherein** the timing switch activates the transmitter at "second" time intervals which are long as compared with the "first" time intervals, and causes it to send out a status signal even if a deviation exceeding the threshold value has not been detected.

4. The method as defined in Claim 3, **wherein** the "second" time intervals are between 1 minute and 1 hour.

5. The method as defined in one of the foregoing claims, **wherein** the threshold value and the "first" time intervals at which the device is activated are matched to one another such that the quotient of the threshold value and the "first" time interval is large as compared with rates of change in tyre pressure which typically occur, in the absence of leakage in the tyre or valve, as a result of changes in tyre temperature while the vehicle is being operated.

6. The method as defined in one of the foregoing claims, **wherein** a gradual pressure loss that lies below the threshold value is determined by analysis of the tyre pressure data sent at the "second" time intervals.

7. The method as defined in one of the foregoing claims, **wherein** if a pressure loss exceeding the threshold value is detected, the "first" time intervals at which pressure measurement and comparison operations occur in the device are shortened, and the transmitter is activated if a number of subsequent pressure measurement and comparison operations, at the shortened time intervals, confirm that the threshold has been exceeded.

8. The method as defined in one of the foregoing claims, **wherein** if a pressure rise exceeding the threshold value is detected, the "first" time intervals at which pressure measurement and comparison operations occur in the device are shortened, and the transmitter is activated if a number of subsequent pressure measurement and comparison operations, at the shortened time intervals, confirm that the threshold has been exceeded.

9. The method as defined in Claim 8, **wherein** the transmitter is not activated until after the tyre pressure has stabilised at a higher level.

10. The method as defined in Claim 7 or 8, **wherein** during operation with shortened "first" time intervals, a new comparison pressure signal is not constituted until after an unshortened "first" time interval has elapsed.

11. The method as defined in Claim 7, 8, or 9, **wherein** if the pressure loss or pressure rise drops below the threshold again, the "first" time intervals are again lengthened.

12. The method as defined in one of the foregoing claims, **wherein** the absolute tyre pressure values are processed and evaluated in the receiver, whereas the device arranged in the valve simply evaluates the measured tyre pressure values in terms of any drift in the tyre pressure.

## Revendications

1. Procédé de fonctionnement d'un dispositif de surveillance et de signalisation sans fil d'une Variation de pression dans les pneumatiques des véhicules, lequel est disposé su la soupape du pneumatique et
contient une source de courant,
un capteur de pression,
un transformateur analogique/numérique pour numériser le signal de pression produit par le capteur de pression,
une mémoire pour mémoriser le signal de pression,
un émetteur,
un comparateur, en particulier dans l'unité modulaire avec un microprocesseur, lequel compare le signal de pression avec un signal de pression de référence précédemment mémorisé, produit un signal lorsque l'écart du signal de pression par rapport au signal de pression de référence dépasse une valeur seuil, et active l'émetteur, lequel transmet ensuite une information sur l'écart établi à un récepteur disposé dans le véhicule,
et un interrupteur à minuterie, lequel active le dispositif dans des intervalles de temps pour un procédé de mesure et de comparaison et, du reste, demeure hors circuit dans des buts d'économie d'énergie, le comparateur mémorisant le signal de pression, et forme avec ce signal de pression un nouveau signal de pression de référence qui remplace le signal de pression de référence utilisé jusqu'ici, caractérisé en ce que le signal de pression de référence est formé par le calcul d'une valeur moyenne de plusieurs signaux de pression précédemment livrés par le capteur.

2. Procédé suivant la revendication 1, caractérisé en ce que l'interrupteur à minuterie active le dispositif dans des intervalles de temps entre 1s et 10s.

3. Procédé suivant la revendication 1 ou 2, caractérisé en ce que l'interrupteur à minuterie active l'émetteur dans des "seconds" intervalles de temps, lesquels sont grandes par rapport aux "premiers" intervalles de temps et permet également d'envoyer un signal d'état quand aucun écart dépassant la valeur seuil n'a été établi.

4. Procédé suivant la revendication 3, caractérisé en ce que les "seconds" intervalles de temps sont compris entre 1 min. et 1 h.

5. Procédé suivant l'une quelconque des revendications précédentes, caractérisé en ce que la valeur seuil et les "premiers" intervalles de temps au cours desquels le dispositif est activé, sont adaptés l'un à l'autre de telle sorte que le quotient issu de la valeur seuil et du "premier" intervalle de temps est grand par rapport aux vitesses de modification de la pression du pneumatique, lesquelles apparaissent de manière typique dans un pneumatique étanche et de soupape étanche en raison de modifications de la température de pneumatique suite à l'action de rouler.

6. Procédé suivant l'une quelconque des revendications précédentes, caractérisé en ce qu'une perte de pression rampante qui se situe en dessous de la valeur seuil, est déterminée par analyse des informations de pression de pneumatique envoyées dans les "seconds" intervalles de temps.

7. Procédé suivant l'une quelconque des revendications précédentes, caractérisé en ce que, ensuite, lorsqu'on établit une perte de pression dépassant la valeur seuil, les "premiers" intervalles de temps au cours desquels les procédés de mesure de pression et de comparaison se déroulent dans le dispositif, sont raccourcis et l'émetteur est alors activé, lorsque, par un certain nombre de processus de mesure de pression et de comparaison qui suivent avec les intervalles de temps raccourcis, le dépassement de la valeur seuil est confirmé.

8. Procédé suivant l'une quelconque des revendications précédentes, caractérisé en ce que, lorsqu'on établit une augmentation de pression dépassant la valeur seuil, les "premiers" intervalles de temps au cours desquels les processus de mesure de pression et de référence se déroulent dans le dispositif, sont raccourcis et l'émetteur est alors activé, lorsque, par un certain nombre de processus de mesure de pression et de référence qui suivent avec les intervalles de temps raccourcis, le dépassement de la valeur seuil est confirmé.

9. Procédé suivant la revendication 8, caractérisé en ce que l'émetteur n'est activé qu'après que la pression de pneumatique s'est stabilisée à un niveau supérieur.

10. Procédé suivant l'une des revendications 7 ou 8, caractérisé en ce qu'en cours du fonctionnement avec les "premiers" intervalles de temps raccourcis, un nouveau signal de pression de référence n'est formé qu'après l'écoulement d'un "premier" intervalle de temps non raccourci.

11. Procédé suivant l'une des revendications 7, 8 ou 9, caractérisé en ce que, lorsque la perte de pression ou, selon le cas, l'augmentation de pression descendent à nouveau sous la valeur seuil, les "premiers" intervalles de temps sont de nouveau prolongés.

12. Procédé suivant l'une quelconque des revendications précédentes, caractérisé en ce que les valeurs absolues de pression de pneumatique sont traitées et analysées dans le récepteur tandis que, dans le dispositif disposé dans la soupape, les valeurs mesurées de pression de pneumatique sont uniquement analysées du point de vue d'une dérive de pression de pneumatique.
